# EUROPEAN PATENT SPECIFICATION

(11) **EP 2 931 957 B1**
(45) Date of publication and mention of the grant of the patent: **16.08.2017**
(21) Application number: 13860456.6
(22) Date of filing: 05.12.2013
(51) Int. Cl.: D06F 33/02

(54) **WASHING MACHINE AND CONTROL METHOD THEREOF**
WASCHMASCHINE UND STEUERUNGSVERFAHREN DAFÜR
MACHINE À LAVER ET SON PROCÉDÉ DE COMMANDE

(30) Priority: 05.12.2012 KR 20120140260
(43) Date of publication of application: 21.10.2015
(73) Proprietor: LG Electronics Inc., Seoul, 07336 (KR)
(72) Inventor: YANG, Jeong Hwa, Seoul 153-023 (KR); SUH, Eun Jung, Seoul 153-023 (KR); LEE, You Jin, Seoul 153-023 (KR)
(74) Representative: Ter Meer Steinmeister & Partner
(86) International application number: PCT/KR2013/011191
(87) International publication number: WO 2014/088333

(56) References cited:
- EP-A2- 2 426 244
- WO-A1-02/068886
- JP-A- 2004 526 116
- KR-A- 20070 114 910
- KR-A- 20100 054 945
- KR-A- 20120 017 093
- KR-A- 20120 023 497

## Description

### Technical Field

The present invention relates to a washing machine and a control method thereof.

### Background Art

In general, a laundry treatment apparatus includes a washing machine, a drying machine, and a washing and drying machine.

The washing machine is an apparatus that performs washing, rinsing, and spin-drying to remove contaminants from laundry, such as clothes and bedclothes, using water, detergent, and mechanical action. The washing machine is classified as a top load type washing machine in which a drum, in which laundry is placed, is rotated about a vertical shaft or a front load type washing machine in which a drum, in which laundry is placed, is rotated about a horizontal shaft.

The drying machine is an apparatus that supplies hot air to clothes to be dried to dry the clothes. In the drying machine, clothes to be dried are introduced into a rotary drum and hot air or cool air is supplied into the drum to dry the clothes.

The washing and drying machine is an apparatus having both a washing function and a drying function. In the washing and drying machine, laundry, such as clothes, is introduced into a rotary drum and a desired function is selected to wash or dry the laundry.

EP 2 426 244 A2 discloses a washing machine to provide a user interface environment using a full-touch LCD to perform communication over a network and a method of controlling the same. So, it is possible to provide a user interface by simple touch manipulation and display information regarding a user manipulation state and an operation state of the washing machine according to visual/tactile tastes.

WO 02/068886 A1 discloses a home appliance device that comprises input means, which are connected to a voice-recognition system for acoustic operator commands. Means for executing command-dependent actions are provided and the voice-recognition system is used to identify and check the authorization of a user.

The laundry treatment apparatus may have a door to open and close a drum, in which laundry, such as clothes, is placed. In a case in which a user holds laundry, it may be difficult for the user to manually operate the door. Consequently, it is necessary to automatically operate the door of the laundry treatment apparatus.

### Disclosure of Invention

### Technical Problem

It is an object of the present invention to provide a washing machine that is capable of automatically operating a door when an object moves within a predetermined distance and an additional command is input and a control method thereof.

### Solution to Problem

The above identified problems are solved by the features of the independent claim. In accordance with an example, a washing machine includes an object sensor for sensing movement of an object within a predetermined distance, an input unit for receiving a user command, a door for opening and closing an entrance for introducing the laundry into the drum, and a controller configured to activate the input unit when the object sensor senses movement of the object and perform an operation corresponding the user command received by the activated input unit.

In accordance with another example, there is provided a control method of a washing machine including Sensing, by an object sensor, movement of an object within a predetermined distance, activating an input unit to receive a user command when the movement of the object is sensed within the predetermined distance, detecting the user command received by the activated input unit, analyzing type of the detected user command, and performing an operation corresponding to the command.

### Advantageous Effects of Invention

In a washing machine according to an embodiment of the present invention and a control method thereof, a door is automatically controlled. Even when a user holds laundry, therefore, it is possible for the user to conveniently wash the laundry.

In a washing machine according to an embodiment of the present invention and a control method thereof, operation of a door is controlled based on voice data set by a user. Consequently, it is possible for the user to easily memorize a command.

In a washing machine according to an embodiment of the present invention and a control method thereof, approach of a person is primarily sensed and a user command is secondarily sensed. Consequently, it is possible to greatly reduce a possibility of malfunction.

In a washing machine according to an embodiment of the present invention and a control method thereof, an input unit is activated when a person approaches a predetermined distance. Consequently, it is possible to reduce power consumption.

In a washing machine according to an embodiment of the present invention and a control method thereof, an input unit is deactivated when another command is not received within a predetermined time after approach of a person. Consequently, it is possible to reduce power consumption.

In a washing machine according to an embodiment of the present invention and a control method thereof, an input unit is deactivated when an object, located within a predetermined distance, deviates from the predetermined distance. Consequently, it is possible to reduce a possibility of malfunction and to reduce power consumption.

In a washing machine according to an embodiment of the present invention and a control method thereof, activating of an input unit is visually or aurally outputted such that a user may recognize that the input unit has been activated. Consequently, it is possible to reduce a possibility of malfunction.

In a washing machine according to an embodiment of the present invention, a correspondence message is outputted when a voice recognized by a voice recognition sensor corresponds with voice data. Consequently, it is possible for a user to easily recognize whether a command has been received.

In a washing machine according to an embodiment of the present invention, a warning message is outputted when an object approaches a second predetermined distance shorter than a first predetermined distance. Consequently, it is possible to prevent injury of a user or damage to a door which may occur as a result of collision between the user and the door.

In a washing machine according to an embodiment of the present invention, an input unit and an object sensor are deactivated when a door is open. Consequently, it is possible to reduce power consumption.

In a washing machine according to an embodiment of the present invention, a door is configured to be opened at a fixed speed for a predetermined time and a display unit is provided to visually or aurally output a current state of the door during opening of the door. Consequently, it is possible for a user to easily recognize a state of the door.

In a washing machine according to an embodiment of the present invention, operation of a door is interrupted when an object approach a door or external pressure is applied to a door during opening of the door. Consequently, it is possible to prevent damage to the door.

In a washing machine according to an embodiment of the present invention, an object sensor is deactivated when indoor illuminance decreases to a predetermined value or less. Consequently, it is possible to reduce power consumption.

### Brief Description of Drawings

The above and other objects, features and other advantages of the present invention will be more clearly understood from the following detailed description taken in conjunction with the accompanying drawings, in which:
FIG. 1 is a perspective view showing a washing machine according to an embodiment of the present invention;
FIG. 2 is a block diagram showing components of the washing machine according to the embodiment of the present invention;
FIGS. 3 to 6 are views showing control states of the washing machine according to the embodiment of the present invention; and
FIG. 7 is a flowchart showing a control method of a washing machine according to an embodiment of the present invention.

### Best Mode for Carrying out the Invention

Advantages and features of the present invention and a method of achieving the same will be more clearly understood from embodiments described below with reference to the accompanying drawings. However, the present invention is not limited to the following embodiments but may be implemented in various different forms. The embodiments are provided merely to complete disclosure of the present invention and to fully provide a person having ordinary skill in the art to which the present invention pertains with the category of the invention. The invention is defined only by the category of the claims. Wherever possible, the same reference numbers will be used throughout the specification to refer to the same or like parts.

Terms 'first', 'second', etc. may be used to describe various elements. However, these elements are not restricted by such terms. These terms are used to distinguish between one element and another element. For example, first contact may be referred to as second contact without departing from the scope of the present invention. In the same manner, second contact may be referred to as first contact. The first contact and the second contact may be both contact but not the same contact.

Terms used in the description of the invention are provided only to explain specific embodiments but are not intended to restrict the invention. In the description of the invention and the accompanying claims, the singular forms are intended to include the plural forms as well, unless context clearly indicates otherwise. The use of marks may indicate any one or both of the singular forms and the plural forms of the terms, and vice versa.

It will be understood that the term "and/or" refers to one or more possible combinations of specified relevant items and includes such combinations. It will be further understood that the terms "comprises" or "comprising" used in this specification designate presence of specified features, integers, steps, operations, elements, and/or components but do not exclude presence or addition of one or more other features, integers, steps, operations, elements, components, and/or groups thereof.

The term "if" may be interpreted to mean "when" or "upon" or "in response to determining" or "in response to detecting" from the context. In the same manner, the phrases "in a determined case" or "in a case in which [a specified condition or event] is detected" may be interpreted to mean "upon determining", "in response to determining", "upon detecting [a specified condition or event]" or "in response to detecting [a specified condition or event]" from the context.

Reference will now be made in detail to the preferred embodiments of the present invention, examples of which are illustrated in the accompanying drawings. Hereinafter, a washing machine, which is a kind of laundry treatment apparatus, will be described by way of example. However, embodiments of the present invention are not limited thereto. For example, idea of the present invention may be applied to other laundry treatment apparatuses, such as a washing machine with a steam spray function, a drying and washing machine, and a drying machine.

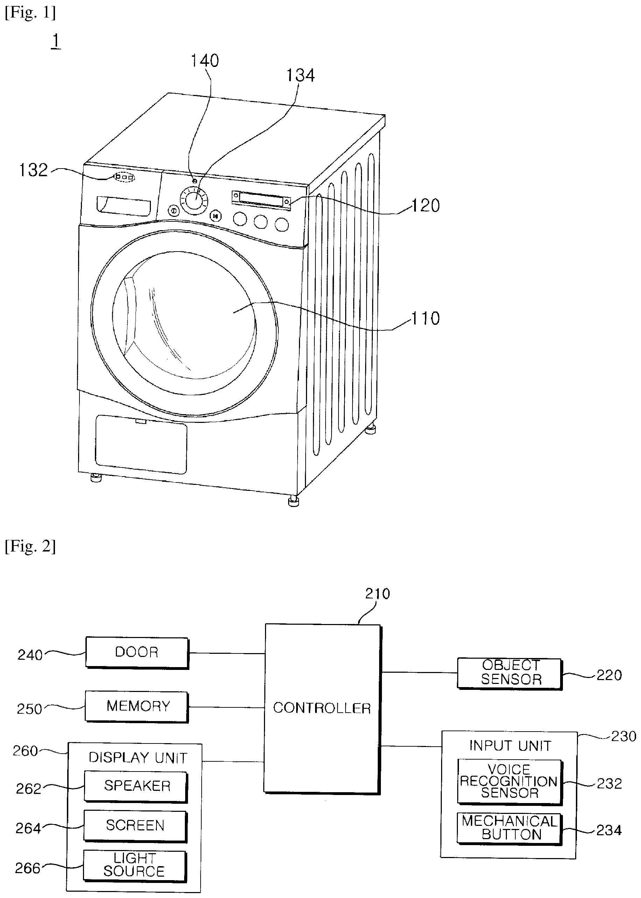

FIG. 1 is a perspective view showing a washing machine according to an embodiment of the present invention.

Referring to FIG. 1, a washing machine 1 according to an embodiment of the present invention may include a case forming the external appearance of the washing machine 1 and a drum rotatably provided in the case to receive laundry, such as clothes. At the inner circumference of the drum are provided lifters to lift and drop the laundry according to rotation of the drum.

The case may be provided at the front thereof with a laundry introduction port, through which laundry is introduced into the drum. The case may be provided at the upper part of the front thereof with a display unit 120 to output control information of the washing machine. The display unit 120 may include a light source, such as liquid crystal display (LCD) or light emitting diodes (LEDs), to output control information of the washing machine. However, embodiments of the present invention are not limited thereto.

A door 110 may be mounted at the laundry introduction port. The door 110 may open and close the laundry introduction port, which is an entrance through which laundry is introduced into the drum. The door 110 may be manually manipulated by a user or may be operated under electronic control. The door 110 may be hingedly connected to the case.

Input units 132 and 134 may be disposed at the front of the case. The input units 132 and 134 may include a voice recognition sensor 132 to recognize a voice and a touch type mechanical button 134 manipulated by a user. Alternatively, a touchscreen, which may be formed together with the display unit 120, may be provided instead of the input units. However, embodiments of the present invention are not limited thereto.

For example, a dial rotatable to select a desired operation may be provided as an input. However, embodiments of the present invention are not limited thereto.

An object sensor 140 may be disposed at the front of the case. The object sensor 140 may sense approach or movement of any object. The object sensor 140 may measure the distance from the object. For example, the object sensor 140 may include a laser sensor, an ultrasonic sensor, or an infrared sensor. However, embodiments of the present invention are not limited thereto.

The object sensor 140 may have a semicircular sensing range. The semicircle may have a radius of about 1.5 m. However, embodiments of the present invention are not limited thereto.

FIG. 2 is a block diagram showing components of the washing machine according to the embodiment of the present invention.

A controller 210 may control operation of the washing machine. The controller 210 may transmit and receive control signals to and from other components of the washing machine. The controller 210 may transmit signals to the other components of the washing machine to control the other components of the washing machine.

The controller 210 may operate an object sensor 220. The object sensor 220 may sense approach or movement of an object within a predetermined distance L.

When the object sensor 220 senses approach or movement of an object within the predetermined distance L, the controller 210 may activate an input unit 230.

The input unit 230 may receive a user command and generate a signal. For example, the activated input unit 230 may receive a user command, such as a touch or a voice, convert the user command into a signal, and transmit the signal to the controller 210.

The input unit 230 may be at least one selected from between a voice recognition sensor 232 and a mechanical button 234. However, embodiments of the present invention are not limited thereto. When the object sensor 220 senses approach or movement of an object within the predetermined distance L, the input unit 230 may be activated.

The input unit 230 may receive a user's voice. For example, the input unit 230 may include a voice recognition sensor 232 to recognize various voices. The voice recognition sensor 232 may recognize a voice and transmit a signal corresponding to the voice to the controller 210.

The input unit 230 may be deactivated. The input unit 230 may be deactivated and thus may not be operated until the input unit 230 receives an activating signal from the controller 210. Upon receiving an activating signal from the controller 210, the input unit 230 may start to sense a control command.

A memory 250 may include a high-speed random access memory. The memory 250 may include a nonvolatile memory, such as a magnetic disc storage device, a flash memory device, or another nonvolatile solid memory device. However, embodiments of the present invention are not limited thereto. The memory 250 may include a readable storage medium.

For example, the memory 250 may include an electronically erasable and programmable read only memory (EEPROM). However, embodiments of the present invention are not limited thereto. During operation of the controller 210, recording of information into EEPROM or removal of information from EEPROM may be performed under control of the controller 210. EEPROM may be a memory device that is capable of retaining information stored therein even when the washing machine is powered off and thus supply of power to EEPROM is interrupted.

The memory 250 may store commands to control operation of the door and voice data corresponding to the commands. The voice data may be changed according to user setting. For example, the memory 250 may store user's voices corresponding to various operation modes of the washing machine as voice data. The voice data may correspond to various operation modes of the washing machine.

The voice data may include voice data corresponding to operation of a door 240.

The controller 210 may compare a voice recognized by the voice recognition sensor 232 with the voice data. A part of the controller 210 to perform comparison between the voice and the voice data may be incorporated into the voice recognition sensor 232. However, embodiments of the present invention are not limited thereto.

Upon determining that the voice recognized by the voice recognition sensor 232 corresponds to the voice data, the controller 210 may control operation of the washing machine based thereupon. When the voice recognized by the voice recognition sensor 232 matches with voice data corresponding to a command to operate the door 240, the controller 210 may control the door 240 to be opened or closed.

When the input unit 230 does not receive a command within a predetermined time after the object sensor 220 senses movement of an object, the controller 210 may deactivate the input unit 230. When an object located within the predetermined distance escape from the predetermined distance, the controller 210 may deactivate the input unit 230.

When a predetermined specific operation is sensed within the predetermined distance, the controller 210 may activate the input unit 230. For example, the memory 250 may store specific operations corresponding to commands to control the washing machine.

When a user's action of swinging his/her arm within the predetermined distance of the washing machine is set so as to correspond to a command to open the door 240, the object sensor 220 may continuously sense whether the user is swinging his/her arm within the predetermined distance of the washing machine. The controller 210 may detect that the signal received from the object sensor 220 corresponds to a command to control operation of the washing machine. The washing machine may include a display unit 260. The display unit 260 may include a speaker 262 to provide an aural output and a screen 264 to provide a visual output. The washing machine includes a light source 266 to indicate a range within which the object sensor 220 senses movement of an object using light. The light source 266 may be a light emitting diode (LED). However, embodiments of the present invention are not limited thereto.

The washing machine includes an illuminance sensor 270 to sense indoor illuminance. When the indoor illuminance decreases to a predetermined value or less, the controller 210 may deactivate the object sensor 220.

The door 240 may be opened at a fixed speed for a predetermined time. The display unit 260 may output an operation state of the door 240. For example, the display unit 260 may visually or aurally output a state in which the door is opening or a state in which opening of the door is completed.

When the object sensor 220 senses approach of an object during opening of the door, the controller 210 may control the operation of the door to be interrupted. When external pressure is applied to the door during opening of the door, the controller 210 may control the operation of the door to be interrupted. The door 240 may include an acceleration sensor or a pressure sensor to sense whether external pressure is applied to the door. However, embodiments of the present invention are not limited thereto.

The object sensor 220 may sense movement of an object within the predetermined distance. The predetermined distance may include a first predetermined distance and a second predetermined distance shorter than the first predetermined distance.

When an object is within the second predetermined distance, the controller 210 may control a warning message to be outputted on the display unit 260. For example, the warning message may be a message warning that the object may collide with the door. However, embodiments of the present invention are not limited thereto. The second predetermined distance may correspond to a moving course of the door.

When the door is open, the controller 210 may deactivate the input unit 230 or the object sensor 220.

The controller 210 may control an operation time of the object sensor 220 or the input unit 230 based on user input. For example, the controller 210 may allow user input of time and may activate the object sensor 220 or the input unit 230 during the received time. The controller 210 may activate the object sensor 220 or the input unit 230 based on a time zone, within which the washing machine is used, selected by the user, to minimize power consumption.

For example, the controller 210 may activate the object sensor 220 or the input unit 230 from 6 p.m. to midnight on weekdays or from noon to midnight on weekends, over which the user generally uses the washing machine and deactivate the object sensor 220 or the input unit 230 over the remaining time. However, embodiments of the present invention are not limited thereto.

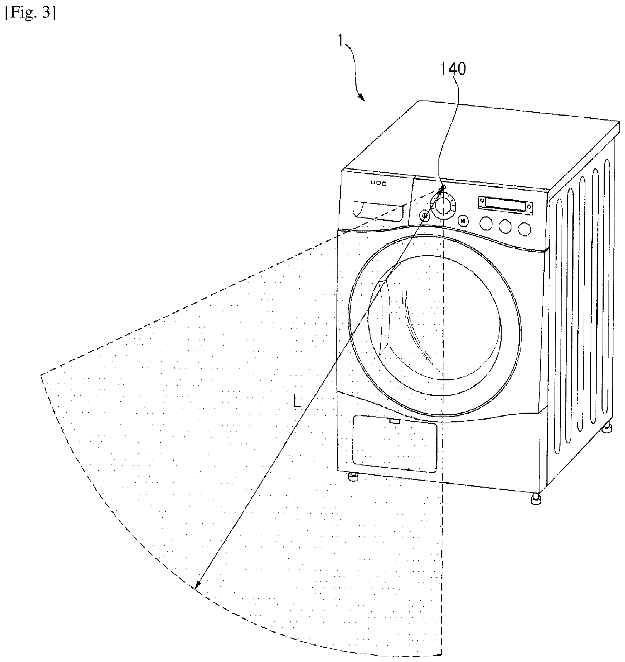

FIGS. 3 to 6 are views showing control states of the washing machine according to the embodiment of the present invention.

Referring to FIG. 3, the washing machine 1 may include the object sensor 140 disposed at the front of the case forming the external appearance of the washing machine 1.

The object sensor 140 may monitor the surroundings of the washing machine 1. The object sensor 140 may monitor movement of an object within a predetermined distance L from the washing machine 1.

The predetermined distance L may be changed by user setting. The object sensor 140 may have a predetermined angle range in which movement of an object is sensed. The object sensor 140 may be mounted at a motor to sense movement of an object while rotating. However, embodiments of the present invention are not limited thereto.

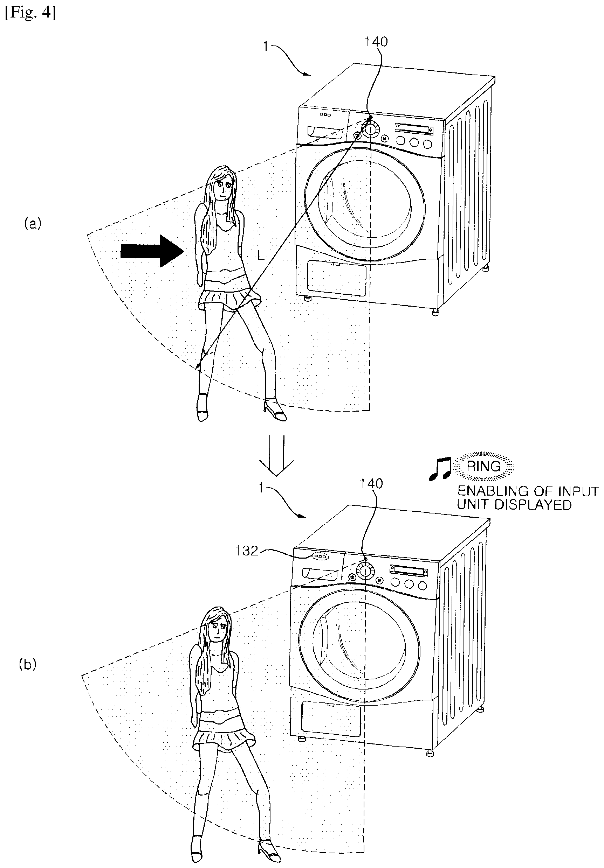

Referring to FIG. 4, the object sensor 140 may sense movement of an object within the predetermined distance L. Upon sensing that a person has entered the predetermined distance L, the object sensor 140 may a sensed result to the controller.

When a person has entered the predetermined distance L from the washing machine 1, the controller may activate the input unit. The activated input unit may continuously check whether a command has been input.

The washing machine may output that the input unit has been activated. The washing machine may output that the input unit has been activated using various methods. For example, the washing machine may output that the input unit has been activated through text or picture on the display unit to provide visual output or may output a voice indicating that the input unit has been activated through the speaker. However, embodiments of the present invention are not limited thereto.

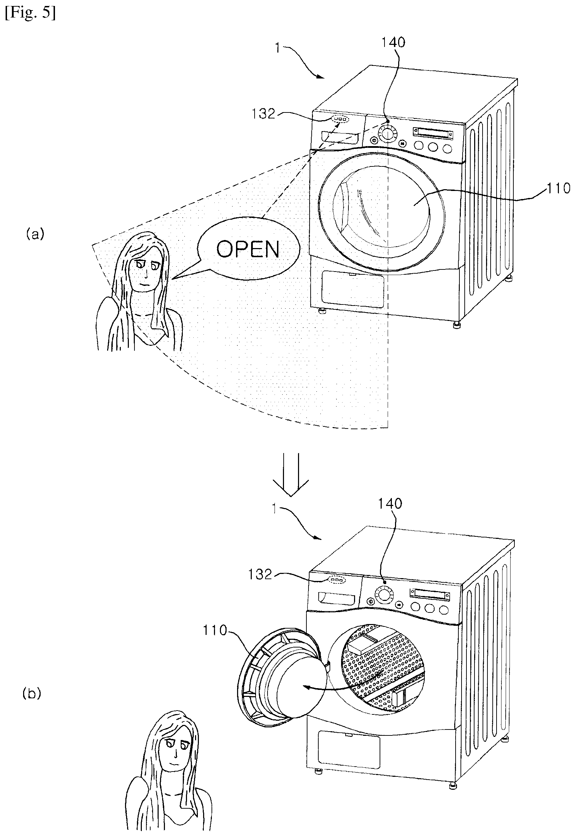

Referring to FIG. 5, the washing machine 1 may receive a user command and may perform a control operation corresponding to the received user command.

The washing machine 1 may include the voice recognition sensor 132. Upon receiving a control command after a user enters the predetermined distance, the washing machine 1 may perform a control operation corresponding to the received control command.

For example, the voice recognition sensor 132 may receive a user's voice and the washing machine may determine whether the received voice contains a control command.

The washing machine may receive a user command using various methods. For example, the voice recognition sensor may recognize a user's voice, convert the recognized voice into a signal, and transmit the signal to the controller.

The controller may compare the voice signal received from the voice recognition sensor with voice data stored in the memory. Upon determining that the voice signal received from the voice recognition sensor corresponds to any one selected from among a plurality of voice data corresponding to a plurality of control commands stored in the memory, the controller may control operation of the washing machine based on the corresponding control command.

When the voice recognized by the voice recognition sensor corresponds with a piece of the voice data, the controller may control the display unit to output a message indicating that the voice recognized by the voice recognition sensor corresponds with a piece of the voice data.

For example, when the voice recognition sensor has senses a voice of 'open', the controller may compare the sensed voice with the voice data. When voice data of 'open' is included in the prestored voice data, the controller may perform a control command corresponding to the voice data of 'open'. When a control command corresponding to 'open' is to open the door 110. The controller may control the door 110 to be opened.

In addition to sensing the user's voice, the washing machine may sense a specific action of the user. The washing machine may store a plurality of specific actions corresponding to a plurality of control commands. Upon sensing that a user has performed a predetermined specific action within the predetermined distance, the washing machine may perform a control operation corresponding to the specific action.

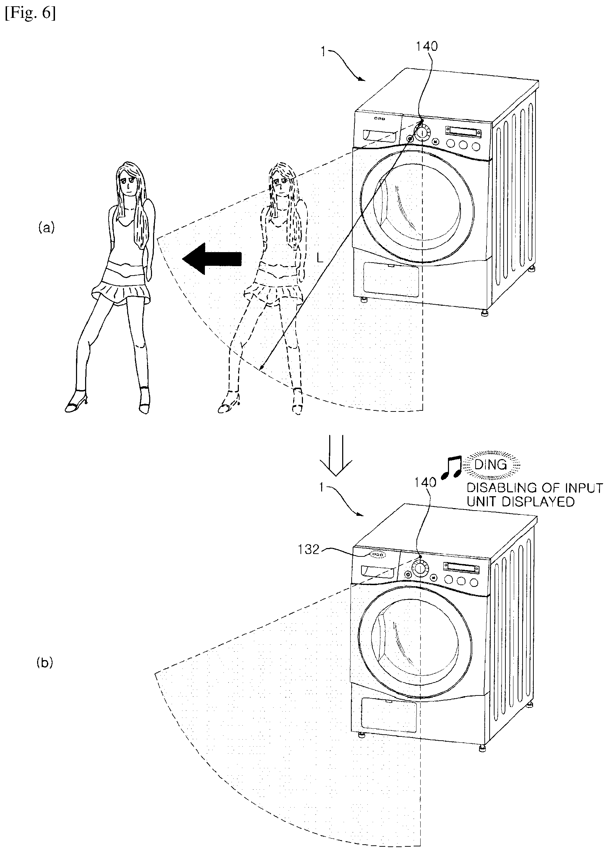

Referring to FIG. 6, when the user deviates from a range in which the object sensor 140 senses movement of an object, the washing machine 1 may deactivate the input unit.

The input unit may be activated only at need to minimize power consumption. The washing machine may visually or aurally output whether the input unit is deactivated.

The object sensor may sense presence and movement of an object within the predetermined distance L. The object sensor may sense that an object, located within the predetermined distance, deviates from the predetermined distance. Upon sensing that an object has deviated from the predetermined distance, the object sensor may inform the controller of the sensed result.

When an object, located within the predetermined distance, deviates from the predetermined distance, the controller may deactivate the input unit. The controller may control the display unit to output that the input unit has been deactivated. For example, the controller may output that the input unit has been activated through the display unit or may output that the input unit has been activated as a voice through the speaker.

In another embodiment, when the input unit does not receive a control command for a predetermined time after an object enters the predetermined distance, the controller may deactivate the input unit. The display unit or the speaker may output that the input unit has been deactivated.

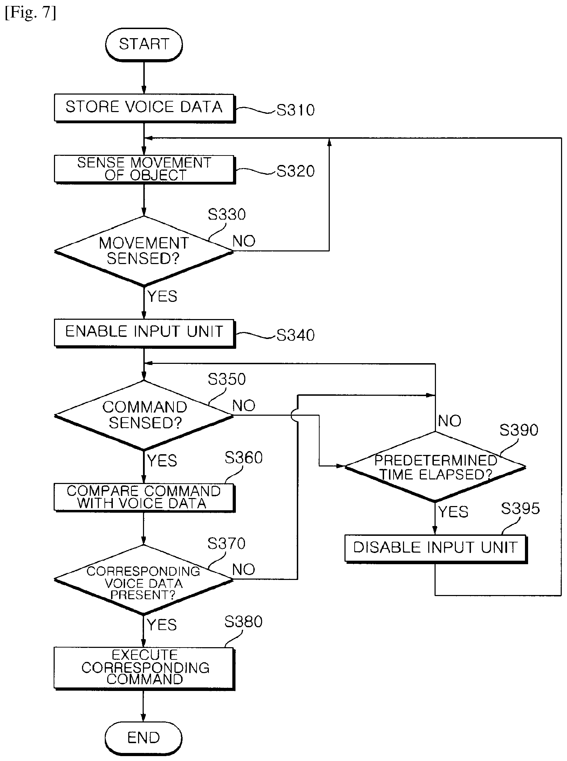

FIG. 7 is a flowchart showing a control method of a washing machine according to an embodiment of the present invention.

Referring to FIG. 7, the control method of the washing machine according to the embodiment of the present invention may include a step of sensing movement of an object within a predetermined distance, a step of activating an input unit to receive a user command upon sensing the movement of the object within the predetermined distance, detecting the user command received by the activated input unit, a step of analyzing type of the command, and a step of opening or closing the door according to the command.

The washing machine may store voice data (S310). For example, the washing machine may record a user's voice. The washing machine may recode voices corresponding to various control commands and store the recorded voices as voice data. Upon sensing a user's voice, the washing machine may compare the sensed voice with the voice data. The washing machine may select a command corresponding to the user's voice and perform the selected command.

In another embodiment, the washing machine may store a specific action. For example, the washing machine may store a plurality of actions corresponding to a plurality of control commands. Upon sensing a specific action, the washing machine may perform a command corresponding to the sensed action. However, embodiments of the present invention are not limited thereto.

The washing machine may sense movement of an object (S320). For example, the washing machine may have a predetermined distance and sense movement of an object within the predetermined distance. The washing machine may determine whether an object has entered the predetermined distance.

Upon sensing movement of an object within the predetermined distance (S330), the washing machine may activate the input unit (S340). The washing machine may not deactivate the input unit until the washing machine sense movement of an object within the predetermined distance. When activated, the input unit may receive a user command. The input unit may receive a control command to control the washing machine. Even when the input unit has been activated, the washing machine may continuously sense movement of the object.

The input unit may receive a control command of the user. When the input unit is a voice recognition sensor, the activated input unit may sense a user's voice. detecting the user command received by the activated input unit (S350), the controller may compare the sensed voice with the voice data (S360).

The controller may compare the voice sensed by the input unit with the voice data to determine whether voice data corresponding to the sensed voice is present (S370). The controller may select voice data corresponding to the voice sensed by the input unit and perform a command corresponding to the selected voice data (S380). For example, when the voice sensed by the input unit matches with voice data corresponding to a command to open the door, the controller may control the door to be opened.

When a control command is not input with a predetermined time after the input unit is activated, the washing machine may deactivate the input unit. When a control command is not input (S350), the washing machine may determine whether the predetermined time has elapsed (S390). Ina case in which the predetermined time has not elapsed, the input unit may continuously sense a control command. When the predetermined time has not elapsed, the input unit may be deactivated (S395).

The control method of the washing machine according to the embodiment of the present invention may include a step of deactivating the input unit or the object sensor when the door is open.

The control method of the washing machine according to the embodiment of the present invention may include a step of interrupting operation of the door when approach of an object is sensed or external pressure is applied to the door during opening of the door.

The control method of the washing machine according to the embodiment of the present invention may include a step of the object sensor setting a first predetermined distance and a second predetermined distance and outputting a warning message when an object is located within the second predetermined distance. The control method of the washing machine according to the embodiment of the present invention may include a step of deactivating the object sensor when indoor illuminance decreases to a predetermined value or less. However, embodiments of the present invention are not limited thereto.

Although all elements constituting the embodiments of the present invention are described to be integrated into a single one or to be operated as a single one, the present invention is not necessarily limited to such embodiments. According to embodiments, all of the elements may be selectively integrated into one or more and be operated as one or more within the object and the scope of the present invention.

Each of the elements may be implemented as independent hardware. Alternatively, some or all of the elements may be selectively combined into a computer program having a program module performing some or all functions combined in one or more pieces of hardware.

A plurality of codes and code segments constituting the computer program may be easily reasoned by those skilled in the art to which the present invention pertains. The computer program may be stored in a computer readable media such that the computer program is read and executed by a computer to implement embodiments of the present invention. Computer program storage media may include magnetic recording media, optical recording media, and carrier wave media.

The term "comprises", "includes", or "has" described herein should be interpreted not to exclude other elements but to further include such other elements since the corresponding elements may be inherent unless mentioned otherwise.

All terms including technical or scientific terms have the same meanings as generally understood by a person having ordinary skill in the art to which the present invention pertains unless mentioned otherwise.

Generally used terms, such as terms defined in a dictionary, should be interpreted to coincide with meanings of the related art from the context. Unless obviously defined in the present invention, such terms are not interpreted as ideal or excessively formal meanings.

Although the preferred embodiments of the present invention have been disclosed for illustrative purposes, those skilled in the art will appreciate that various modifications, additions and substitutions are possible without departing from the scope of the invention as disclosed in the accompanying claims.

The embodiments disclosed in the present invention are provided not to limit the technical concept of the present invention but to illustrate the technical concept of the present invention. Therefore, the scope of the technical concept of the present invention is not limited by such embodiments. The scope of the protection of the present invention should be determined by reasonable interpretation of the appended claims and all technical concepts coming within the equivalency range of the present invention are should be interpreted to be embraced in the scope of the right of the present invention.

### Mode for the Invention

Various embodiments have been described in the best mode for carrying out the invention.

### Industrial Applicability

In a washing machine according to an embodiment of the present invention and a control method thereof, it is possible to automatically operate a door when an object moves within a predetermined distance and an additional command is input, thereby preventing damage to the door. Consequently, the present invention has industrial applicability.

## Claims

1. A washing machine (1) comprising:
an object sensor (220) for sensing movement of an object within a predetermined distance (L);
an input unit (230) for receiving a user command;
an illuminance sensor (270) for sensing indoor illuminance,
a door (240) for opening and closing an entrance for introducing the laundry into the drum; and
a controller (210) configured to:
activate the input unit (230) when the object sensor (220) senses movement of the object and perform an operation corresponding the user command received by the activated input unit (230); and
deactivate the object sensor (220), when the indoor illuminance decreases to a predetermined value or less.

2. The washing machine (1) according to claim 1, wherein the input unit (230) comprises a voice recognition sensor (232) for recognizing a user's voice, and when the user's voice recognized by the voice recognition sensor (232) is a command to open the door (240), the controller (210) opens the door (240).

3. The washing machine (1) according to claim 2, further comprising: a memory (250) for storing a command to control operation of the door (240) and voice data corresponding to the command, wherein when the voice recognition sensor (232) recognizes a voice, the controller (210) compares the voice recognized by the voice recognition sensor (232) with the voice data.

4. The washing machine (1) according to claim 1, wherein, when an object, located within the predetermined distance (L), deviates from the predetermined distance (L), the controller (210) deactivates the input unit (230).

5. The washing machine (1) according to claim 1, wherein when a predetermined specific action is sensed within the predetermined distance (L), the controller (210) performs a control operation corresponding to the specific action.

6. The washing machine (1) according to claim 1, further comprising a display unit (260) outputting that the input unit (230) has been activated.

7. The washing machine (1) according to claim 1, wherein the predetermined distance (L) comprises a first predetermined distance and a second predetermined distance shorter than the first predetermined distance, and the washing machine (1) further comprises a display unit (260) outputting a warning message when an object is within the second predetermined distance.

8. The washing machine (1) according to claim 7 wherein the second predetermined distance corresponds to a moving course of the door (110).

9. The washing machine (1) according to claim 1, wherein, the controller (210) deactivates the input unit (230) or the object sensor (220), when the door (240) is open.

10. A control method of a washing machine (1) comprising:
sensing indoor illuminance by an illuminance sensor (270);
sensing (S320), by an object sensor (220), movement of an object within a predetermined distance (L);
activating (S340) an input unit (230) to receive a user command when the movement of the object is sensed (S330) within the predetermined distance (L);
detecting (S350) the user command received by the activated input unit (230);
analyzing type of the detected user command; and performing (S380) an operation corresponding to the command; and
deactivating the object sensor (220), when the indoor illuminance decreases to a predetermined value or less.

11. The control method according to claim 10, wherein the input unit (230) recognizes a voice (S360) and outputs a voice signal, and the analyzing type of the user command comprises comparing (S370) the voice signal with prestored voice data corresponding to a command to control operation of a door (240).

12. The control method according to claim 10, wherein the activating (S340) the input unit (230) comprises visually outputting that the input unit (230) has been activated.

13. The control method according to claim 10, further comprising deactivating (S395) the input unit (230) when the input unit (230) does not receive (S350) a command within a predetermined time (S390) after the movement of the object is sensed within the predetermined distance (L).

14. The control method according to claim 10, wherein the performing (S380) the operation corresponding to the command comprises performing an operation to open the door (240), when the user command sensed at the detecting the user command received by the activated input unit (230) is a command to open a door (240).

## Patentansprüche

1. Waschmaschine (1), aufweisend:
einen Objektsensor (220) zum Erfassen einer Bewegung eines Objekts innerhalb einer vorbestimmten Entfernung (L);
eine Eingabeeinheit (230) zum Empfangen eines Benutzerbefehls;
einen Beleuchtungsstärkensensor (270) zum Erfassen einer Innenraumbeleuchtungsstärke,
eine Tür (240) zum Öffnen und Schließen eines Zugangs zum Einführen der Wäsche in die Trommel; und
eine Steuerung (210), die konfiguriert ist zum:
Aktivieren der Eingabeeinheit (230), wenn der Objektsensor (220) die Bewegung des Objekts erfasst, und Ausführen einer Operation, die dem von der aktivierten Eingabeeinheit (230) empfangenen Benutzerbefehl entspricht; und
Deaktivieren des Objektsensors (220), wenn die Innenraumbeleuchtungsstärke auf einen vorbestimmten Wert oder darunter abnimmt.

2. Waschmaschine (1) nach Anspruch 1, wobei die Eingabeeinheit (230) einen Spracherkennungssensor (232) zum Erkennen der Stimme eines Benutzers aufweist, und wenn die von dem Spracherkennungssensor (232) erkannte Stimme des Benutzers ein Befehl zum Öffnen der Tür (240) ist, die Steuerung (210) die Tür öffnet (240).

3. Waschmaschine (1) nach Anspruch 2, ferner aufweisend: einen Speicher (250) zum Speichern eines Befehls zum Steuern eines Betriebs der Tür (240) und von Sprachdaten, die dem Befehl entsprechen, wobei, wenn der Spracherkennungssensor (232) eine Stimme erkennt, die Steuerung (210) die von dem Spracherkennungssensor (232) erkannte Stimme mit den Sprachdaten vergleicht.

4. Waschmaschine (1) nach Anspruch 1, wobei, wenn ein Objekt, das sich innerhalb der vorbestimmten Entfernung (L) befindet, von der vorbestimmten Entfernung (L) abkommt, die Steuerung (210) die Eingabeeinheit (230) deaktiviert.

5. Waschmaschine (1) nach Anspruch 1, wobei, wenn eine vorbestimmte spezifische Aktion innerhalb der vorbestimmten Entfernung (L) erfasst wird, die Steuerung (210) eine der jeweiligen Aktion entsprechende Steuerungsoperation ausführt.

6. Waschmaschine (1) nach Anspruch 1, ferner aufweisend eine Anzeigeeinheit (260), die ausgibt, dass die Eingabeeinheit (230) aktiviert wurde.

7. Waschmaschine (1) nach Anspruch 1, wobei die vorbestimmte Entfernung (L) eine erste vorbestimmte Entfernung und eine zweite vorbestimmte Entfernung, die kürzer als die erste vorbestimmte Entfernung ist, aufweist und die Waschmaschine (1) ferner eine Anzeigeeinheit (260) aufweist, die eine Warnmeldung ausgibt, wenn ein Objekt sich innerhalb der zweiten vorbestimmten Entfernung befindet.

8. Waschmaschine (1) nach Anspruch 7, wobei die zweite vorbestimmte Entfernung einem Bewegungsverlauf der Tür (110) entspricht.

9. Waschmaschine (1) nach Anspruch 1, wobei die Steuerung (210) die Eingangseinheit (230) oder den Objektsensor (220) deaktiviert, wenn die Tür (240) geöffnet ist.

10. Steuerungsverfahren einer Waschmaschine (1), aufweisend:
Erfassen der Innenraumbeleuchtungsstärke durch einen Beleuchtungsstärkensensor (270);
Erfassen (S320), durch einen Objektsensor (220), einer Bewegung eines Objekts innerhalb einer vorbestimmten Entfernung (L);
Aktivieren (S340) einer Eingabeeinheit (230) zum Empfangen eines Benutzerbefehls, wenn die Bewegung des Objekts innerhalb der vorbestimmten Entfernung (L) erfasst wird (S330);
Detektieren (S350) des von der aktivierten Eingabeeinheit (230) empfangenen Benutzerbefehls;
Analysieren der Art des detektierten Benutzerbefehls; und Ausführen (S380) einer Operation, die dem Befehl entspricht; und
Deaktivieren des Objektsensors (220), wenn die Innenraumbeleuchtungsstärke auf einen vorbestimmten Wert oder darunter abnimmt.

11. Steuerungsverfahren nach Anspruch 10, wobei die Eingabeeinheit (230) eine Stimme (S360) erkennt und ein Sprachsignal ausgibt, und das Analysieren der Art des Benutzerbefehls ein Vergleichen (S370) des Sprachsignals mit vorgespeicherten Sprachdaten, die einem Befehl entsprechen, den Betrieb einer Tür (240) zu steuern, aufweist.

12. Steuerungsverfahren nach Anspruch 10, wobei das Aktivieren (S340) der Eingabeeinheit (230) ein visuelles Ausgeben, dass die Eingabeeinheit (230) aktiviert wurde, aufweist.

13. Steuerungsverfahren nach Anspruch 10, ferner aufweisend Deaktivieren (S395) der Eingabeeinheit (230), wenn die Eingabeeinheit (230) innerhalb einer vorbestimmten Zeit (S390) nach dem Erfassen der Bewegung des Objekts innerhalb der vorbestimmten Entfernung (L) keinen Befehl empfängt.

14. Steuerungsverfahren nach Anspruch 10, wobei das Ausführen der Operation (S380), die dem Befehl entspricht, das Ausführen einer Operation zum Öffnen der Tür (240) aufweist, wenn der Benutzerbefehl, erfasst beim Detektieren des Benutzerbefehls, empfangen durch die aktivierte Eingabeeinheit (230), ein Befehl zum Öffnen einer Tür (240) ist.

## Revendications

1. Lave-linge (1) comprenant :
un détecteur d'objet (220) pour détecter un mouvement d'un objet à moins d'une distance prédéterminée (L) ;
une unité d'entrée (230) pour recevoir une commande d'utilisateur ;
un détecteur d'éclairement (270) pour détecter un éclairement intérieur ;
une porte (240) pour ouvrir et fermer une entrée pour introduire le linge dans le tambour ; et
un organe de commande (210) configuré pour :
activer l'unité d'entrée (230) lorsque le détecteur d'objet (220) détecte un mouvement de l'objet et effectuer une opération correspondant à la commande d'utilisateur reçue par l'unité d'entrée activée (230) ; et
désactiver le détecteur d'objet (220), lorsque l'éclairement intérieur diminue à une valeur prédéterminée ou moins.

2. Lave-linge (1) selon la revendication 1, dans lequel l'unité d'entrée (230) comprend un détecteur de reconnaissance vocale (232) pour reconnaître une voix d'utilisateur, et lorsque la voix d'utilisateur reconnue par le détecteur de reconnaissance vocale (232) est une commande pour ouvrir la porte (240), l'organe de commande (210) ouvre la porte (240).

3. Lave-linge (1) selon la revendication 2, comprenant en outre : une mémoire (250) pour mémoriser une commande pour commander un fonctionnement de la porte (240) et des données vocales correspondant à la commande, dans lequel, lorsque le détecteur de reconnaissance vocale (232) reconnaît une voix, l'organe de commande (210) compare la voix reconnue par le détecteur de reconnaissance vocale (232) aux données vocales.

4. Lave-linge (1) selon la revendication 1, dans lequel, lorsqu'un objet, situé à moins de la distance prédéterminée (L), s'écarte de la distance prédéterminée (L), l'organe de commande (210) désactive l'unité d'entrée (230).

5. Lave-linge (1) selon la revendication 1, dans lequel, lorsqu'une action spécifique prédéterminée est détectée à moins de la distance prédéterminée (L), l'organe de commande (210) effectue une opération de commande correspondant à l'action spécifique.

6. Lave-linge (1) selon la revendication 1, comprenant en outre une unité d'affichage (260) délivrant que l'unité d'entrée (230) a été activée.

7. Lave-linge (1) selon la revendication 1, dans lequel la distance prédéterminée (L) comprend une première distance prédéterminée et une deuxième distance prédéterminée plus courte que la première distance prédéterminée, et le lave-linge (1) comprend en outre une unité d'affichage (260) délivrant un message d'avertissement lorsqu'un objet est à moins de la deuxième distance prédéterminée.

8. Lave-linge (1) selon la revendication 7, dans lequel la deuxième distance prédéterminée correspond à un parcours de déplacement de la porte (110).

9. Lave-linge (1) selon la revendication 1, dans lequel l'organe de commande (210) désactive l'unité d'entrée (230) ou le détecteur d'objet (220), lorsque la porte (240) est ouverte.

10. Procédé de commande d'un lave-linge (1) comprenant :
la détection d'un éclairement intérieur par un détecteur d'éclairement (270) ;
la détection (S320), par un détecteur d'objet (220), d'un mouvement d'un objet à moins d'une distance prédéterminée (L) ;
l'activation (S340) d'une unité d'entrée (230) pour recevoir une commande d'utilisateur lorsque le mouvement de l'objet est détecté (S330) à moins de la distance prédéterminée (L) ;
la détection (S350) de la commande d'utilisateur reçue par l'unité d'entrée activée (230) ;
l'analyse du type de la commande d'utilisateur détectée ; et l'exécution (S380) d'une opération correspondant à la commande ; et
la désactivation du détecteur d'objet (220), lorsque l'éclairement intérieur diminue à une valeur prédéterminée ou moins.

11. Procédé de commande selon la revendication 10, dans lequel l'unité d'entrée (230) reconnaît une voix (S360) et délivre un signal vocal, et l'analyse du type de la commande d'utilisateur comprend la comparaison (S370) du signal vocal à des données vocales préalablement mémorisées correspondant à une commande pour commander le fonctionnement d'une porte (240).

12. Procédé de commande selon la revendication 10, dans lequel l'activation (S340) de l'unité d'entrée (230) comprend la sortie visuelle que l'unité d'entrée (230) a été activée.

13. Procédé de commande selon la revendication 10, comprenant en outre la désactivation (S395) de l'unité d'entrée (230) lorsque l'unité d'entrée (230) ne reçoit pas (S350) une commande au cours d'un temps prédéterminé (S390) après la détection du mouvement de l'objet à moins de la distance prédéterminée (L).

14. Procédé de commande selon la revendication 10, dans lequel l'exécution (S380) de l'opération correspondant à la commande comprend l'exécution d'une opération pour ouvrir la porte (240), lorsque la commande d'utilisateur détectée à la détection de la commande d'utilisateur reçue par l'unité d'entrée activée (230) est une commande d'ouverture de porte (240).
